# EUROPÄISCHE PATENTANMELDUNG

(11) **EP 2 339 154 A1**
(43) Veröffentlichungstag der Anmeldung: **29.06.2011**
(21) Anmeldenummer: 10015470.7
(22) Anmeldetag: 09.12.2010
(51) Int. Cl.: F02D 41/10, F02D 41/30, F02B 37/16

(54) **Verfahren zum Betrieb einer einen Abgasturbolader aufweisenden Brennkraftmaschine und eine Brennkraftmaschine zur Durchführung des Verfahrens**

(30) Priorität: 24.12.2009 DE 102009060357
(71) Anmelder: Volkswagen Aktiengesellschaft, 38436 Wolfsburg (DE)
(72) Erfinder: Siebert, Werner, 38448 Wolfsburg (DE)

(57) **Zusammenfassung**

Die Erfindung betrifft eine Brennkraftmaschine (1) mit einem Abgasturbolader (2) mit einem Verdichter (3) im Ansaugtrakt (4) und mit einer Abgasturbine (5) im Abgasstrang (6), um angesaugte Ansaugluft (11) auf einen erhöhten Ladedruck zu verdichten. Erfindungsgemäß wird in Abhängigkeit einer bestimmten Lastanforderung während zweier aufeinanderfolgender Takte des Verbrennungszyklus der Brennkraftmaschine (1) in kurzem zeitlichen Abstand mehrfach Kraftstoff (7) eingespritzt. In Verbindung mit einem zusätzlichen Luftvolumen, welches dem Abgasstrang (6) in Strömungsrichtung vor der Abgasturbine (5) zusätzlich zu dem Abgasstrom (12) mit einem erhöhten Druck zuführbar ist, wird ein wesentlich schnellerer Druckaufbau mittels der Abgasturbine (5) und damit eine Verbesserung des dynamischen Verhaltens, insbesondere auch einer vergleichsweise groß dimensionierten Abgasturbine (5), erreicht.

## Beschreibung

Die Erfindung betrifft ein Verfahren zum Betrieb einer einen Abgasturbolader aufweisenden Brennkraftmaschine, welcher einen Verdichter im Ansaugtrakt und eine Abgasturbine im Abgasstrang umfasst, bei dem angesaugte Umgebungsluft auf einen erhöhten Ladedruck verdichtet wird. Weiterhin betrifft die Erfindung eine derartige Brennkraftmaschine zur Durchführung des Verfahrens.

Die Entwicklung von Brennkraftmaschinen mit Abgasturboladern ist zunehmend auf ein hohes Drehmoment bei relativ niedrigen Drehzahlen und einem verzögerungsfreien Ansprechverhalten ausgerichtet. Dieser Zielsetzung wird mit einer Auslegung des Abgasturboladers Rechnung getragen, die speziell für den unteren Drehzahlbereich optimiert ist. Solche Abgasturbolader sind bezüglich ihres Durchsatzvermögens, bezogen auf das Hubvolumen des Motors, sehr klein, womit sie schon bei kleinen Abgasmassenströmen hohe Druckverhältnisse über den Lader realisieren können.

Im Betrieb einer Brennkraftmaschine mit einem Abgasturbolader wird über einen Bypasskanal für eine Abgasturbine des Abgasturboladers ein Teilstrom des Abgases wahlweise an der Abgasturbine vorbeigeleitet. Hierzu ist in dem Bypasskanal ein auch als Wastegateventil bezeichnetes Bypassventil zum Öffnen oder Schließen des Bypasskanals angeordnet, welches in einem geschlossenen Zustand gegen einen Ventilsitz gedrückt wird. Bei einer Lastanforderung an die Brennkraftmaschine wird das Bypassventil geschlossen und mit einer vorbestimmten Kraft gegen den Ventilsitz gedrückt, wobei die Kraft derart gewählt wird, dass gegen den Abgasdruck der Brennkraftmaschine während der Lastanforderung der Bypasskanal strömungs- und druckdicht verschlossen ist.

Ein solcher elektrisch betriebener Wastegatesteller, der unabhängig von den an der Brennkraftmaschine anliegenden Drücken geregelt werden kann, ist beispielsweise aus der DE 10 2007 009 267 A1 bekannt.

Zur Verbesserung des dynamischen Verhaltens von Brennkraftmaschinen mit Abgasturboladern sind auch bereits verschiedene Lösungsvorschläge bekannt geworden. So beschreibt die DE 10 2006 027 865 A1 eine Brennkraftmaschine, beispielsweise einen Antriebsmotor eines Kraftfahrzeugs, mit mindestens einem Abgasturbolader zur permanenten Erhöhung des Ladedrucks und einen mittels einer steuerbaren Kupplung antreibbaren externen Verdichter, durch den komprimierte Luft vor der Abgasturbine des Abgasturboladers zuführbar ist.

Weiterhin ist es aus der DE 39 06 312 C2 sowie aus der DE 199 44 946 A1 bekannt, dass zur Verkleinerung des Turbolochs während der Beschleunigung aus einem Druckluftspeicher eine bestimmte Luftmenge in das Saugrohr der Brennkraftmaschine eingeblasen und die KraftstoffEinspritzmenge dementsprechend angepasst wird. Die für die Brennkraftmaschine benötigte Druckluft kann dabei aus einem Druckluftspeicher eines Druckluftbremssystems des Fahrzeugs entnommen werden.

Einem in der DE 692 19 822 T2 beschriebenen Abgasturbolader ist ein Elektromotor zugeordnet, über den der Abgasturbolader in bestimmten Betriebsphasen zusätzlich elektrisch angetrieben wird. Der Elektromotor umfasst einen gehäusefesten Stator sowie einen drehfest auf der Welle angeordneten Rotor im Bereich zwischen Abgasturbinenrad und Verdichterrad.

Die DE 10 2004 011 251 A1 bezieht sich auf einen Verdichter, insbesondere für eine Brennkraftmaschine mit einem Abgasturbolader mit einem Turboverdichter und einer Abgasturbine, mit einem zusätzlichen, stromab des Turboverdichters angeordneten Verdichter, dessen Verdichterrad von einem Elektromotor antreibbar und mit einer Schwungmasse gekoppelt ist, wobei das Verdichterrad des zusätzlichen Verdichters von einem Bypass mit einem einstellbaren Sperrorgan zu überbrücken ist. Im niederen Teillastbetrieb wird dem Verdichterrad zur Realisierung eines Kaltluft-Turbinenbetriebs Verbrennungsluft über den Zusatzkanal zugeführt und die Verdichterdrehzahl durch Betätigung des Elektromotors reguliert. Bei Beschleunigung der Brennkraftmaschine wird dem Verdichterrad Verbrennungsluft über den Verdichtereinlasskanal zugeführt und im Volllastbereich wird der Bypass zur Umgehung des Verdichterrads geöffnet.

Vor diesem Hintergrund liegt der Erfindung die Aufgabe zugrunde, das Ansprechverhalten des Abgasturboladers, insbesondere eines vergleichsweise groß dimensionierten Abgasturboladers, zu verbessern.

Diese Aufgabe wird gelöst mit einem Verfahren gemäß den Merkmalen des Patentanspruchs 1. Die Unteransprüche betreffen besonders zweckmäßige Weiterbildungen der Erfindung. Erfindungsgemäß ist also ein Verfahren vorgesehen, bei dem in einem Betriebszustand mit einer erhöhten Lastanforderung zum schnellen Druckaufbau mittels der Abgasturbine während eines Takts und/oder mehreren nacheinander folgenden Takten der Brennkraftmaschine mehrfach Kraftstoff eingespritzt wird. Durch die mehrfache Kraftstoffeinspritzung wird in einfacher Weise die Temperatur in der Abgasturbine des Abgasturboladers erhöht, indem es dort in Verbindung mit dem im Abgas vorhandenen Sauerstoff zu einer Nachverbrennung des Kraftstoffs und damit zu einem erhöhten Gasdruck kommt. Hierdurch kann eine vergleichsweise große Abgasturbine eingesetzt werden, ohne das Ansprechverhalten gegenüber kleinen Abgasturbinen zu verschlechtern, und der mit der großen Abgasturbine einhergehende verbesserte Wirkungsgrad sowie die damit verbundene Reduzierung des Kraftstoffverbrauchs genutzt werden. Außerdem lassen sich derartige vergleichsweise große Abgasturbolader kostengünstig herstellen. Ein solches verbessertes Ansprechverhalten des Turboladers kann durch die Steuerung der Parameter im Motorsteuergerät bei der erhöhen Lastanforderung beispielsweise in Beschleunigungsphasen zusätzlich optimiert werden.
Die mehreren nacheinander folgenden Takte können unmittelbar im Anschluss an den ersten Takt oder aber auch in einem vorbestimmten Muster, also unter Auslassung einzelner Takte, folgen. Dies bedeutet beispielsweise, dass nach einem ersten Takt mit z.B. einer Doppeleinspritzung, ein oder mehrere Takte ohne Doppeleinspritzung folgen. In diesen mehreren Takten erfolgt jedoch eine einfache Einspritzung in dem dafür vorgesehenen, aus dem Stand der Technik bekannten Takt.

Eine besonders vorteilhafte Ausgestaltung des Verfahrens wird dadurch erreicht, dass bei der erhöhten Lastanforderung während des Ansaugtakts sowie während des Verdichtungs- und/oder Arbeitstakts Kraftstoff eingespritzt wird. Die Aufheizung im Abgasstrang entsteht infolge der mehrfachen, insbesondere doppelten Einspritzung mit einer frühen Kraftstoffeinspritzung während des Ansaugtakts sowie beispielsweise einer späten, zweiten Kraftstoffeinspritzung vor der Zündung im oberen Tonpunkt.

Eine weitere Verbesserung des Ansprechverhaltens wird dabei durch zusätzliche Freiheitsgrade erreicht, indem der Zündwinkel, die Einspritzlage und/oder die Einspritzmenge für diesen Betriebszustand variabel eingestellt werden. Dabei kommen Einspritzstrategien in Kombination mit einer Zündwinkelverstellung mit dem Ziel eines schnellen Druckaufbaus des Turboladers durch die höhere Abgasenergie zur Anwendung. Durch den schnelleren Druckaufbau des Ladedrucks ergeben sich Dynamikvorteile im Fahrbetrieb des Kraftfahrzeugs, insbesondere durch einen schnelleren Momentenaufbau der Brennkraftmaschine. Zusätzlich kann ein vergleichsweise kleiner Abgasturbolader durch einen größeren Abgasturbolader ersetzt werden, um somit neben der höheren Temperaturbeständigkeit weitere Vorteile im Bereich des Abgasgegendrucks und der damit verbundenen geringeren Ladungswechselarbeit der Brennkraftmaschine zu erzielen und den Kraftstoffverbrauch des Kraftfahrzeugs zu senken. Die Mehrfacheinspritzung wird dabei durch das Motorsteuergerät geregelt.

Eine weitere besonders Erfolg versprechende Ausgestaltung des Verfahrens wird auch dadurch realisiert, dass dem Abgasstrang in Strömungsrichtung vor der Abgasturbine zusätzlich zu dem Abgasstrom weitere Luft mit einem Überdruck gegenüber dem Umgebungsdruck zugeführt wird. Hierdurch kann bei einer erhöhten Lastanforderung, beispielsweise im Beschleunigungsfall oder während einer Warmlaufphase, eine Nachverbrennung der Abgase und somit eine höhere Energiedichte erreicht werden, wobei die frei gewordene Wärmeenergie den Katalysator aufheizt, sodass er seine Konvertierungsrate schneller erreicht. Demgegenüber wird die aus dem Stand der Technik bekannte Zufuhr von Sekundärluft bisher ausschließlich zur Abgasverbesserung durch Lufteinblasung in den Abgasstrang verwendet.

Dabei ist es besonders zweckmäßig, wenn die Luft aus dem Ansaugtrakt in Strömungsrichtung hinter dem Verdichter entnommen und dem Abgasstrang zugeführt wird, wobei zeitweise die verfügbare druckbeaufschlagte Ansaugluft entnommen wird. Dabei kann also auf die ohnehin verfügbare Druckluft zurückgegriffen werden, sodass sich das erfindungsgemäße Verfahren in einfacher Weise realisieren lässt.

Zu diesem Zweck ist es insbesondere von Vorteil, wenn die zusätzliche Luft mittels einer Druckzuführleitung zugeführt wird, deren Durchlass lediglich während der erhöhten Lastanforderung geöffnet wird, sodass lediglich ein Absperrventil geöffnet werden muss, um das Überströmen der verdichteten Ansaugluft in den Abgasstrang zu ermöglichen. Das Absperrventil kann dabei ähnlich einem Wastegateventil ausgeführt sein.

Alternativ kann die Druckluft aus einem zusätzlichen Druckluftbehälter entnommen werden, welcher beispielsweise von dem Abgasturbolader gespeist wird. Eine andere, ebenfalls besonders praxisgerechte Abwandlung wird dadurch geschaffen, dass die Luft mittels eines Zusatzverdichters mit einem einstellbaren Druck zugeführt wird. Hierdurch kann der mit einem Überdruck in den Abgasstrang einströmende Frischluftstrom problemlos und unabhängig von der Fahrsituation in der erforderlichen Menge und mit dem jeweils optimalen Druck zugeführt werden, ohne dass das für die Brennkraftmaschine verfügbare Frischluftvolumen beeinträchtigt wird. Selbstverständlich kann die in den Abgasstrang strömende Luft zusätzlich auch erwärmt oder in sonstiger Weise vorbehandelt werden.

Weiterhin erweist es sich als besonders hilfreich, wenn die Luft aus einem Ansaugtakt in Strömungsrichtung hinter einer Drosselklappe der Brennkraftmaschine entnommen wird, also beispielsweise aus dem Saugrohr der Brennkraftmaschine abgeleitet wird.

Eine andere, ebenfalls besonders Erfolg versprechende Abwandlung wird auch dadurch realisiert, dass ein Teilstrom des Abgases mittels eines Wastegateventils unter Umgehung der Abgasturbine einem Abgasauslass zugeführt wird, sodass bei einem zu großen Abgasvolumenstrom das Abgas an der Abgasturbine durch einen Bypass unmittelbar dem Abgasauslass zugeführt wird. Alternativ kann auch ein Teilstrom des Abgases in den Ansaugtrakt zurückgeführt werden.

Die erfindungsgemäße Aufgabe wird weiterhin auch mit einer einen Abgasturbolader aufweisenden Brennkraftmaschine zur Durchführung des Verfahrens dadurch gelöst, dass im Abgasstrang in Strömungsrichtung vor der Abgasturbine eine Einlassöffnung für mittels Druckzuführleitüng zuführbare Druckluft angeordnet ist. Hierdurch wird in einfacher Weise eine Zuführung eines weiteren Luftvolumens mit einem vergleichsweise hohen Sauerstoffanteil ermöglicht, sodass es in Verbindung mit einer mehrfachen Kraftstoffeinspritzung zu einer Nachverbrennung des Kraftstoffs in dem Abgasstrang der Brennkraftmaschine und dadurch zu einer größeren Beschleunigung der Abgasturbine kommt.

Dabei wird eine besonders Erfolg versprechende Weiterbildung der Erfindung dadurch erreicht, dass die Druckzuführleitung mit dem Ansaugtrakt der Brennkraftmaschine in Strömungsrichtung hinter dem Verdichter verbunden ist, sodass die zuzuführende Luft bereits in gewünschter Weise komprimiert ist und einen entsprechenden Überdruck aufweist.

Weiterhin hat es sich bereits als besonders praxisgerecht erwiesen, wenn die Brennkraftmaschine ein die Luftzuführung zu der Druckzuführleitung unterbrechendes, elektrisch betätigbares Absperrorgan aufweist, welches vorzugsweise in der Druckzuführleitung angeordnet ist, um so ein unerwünschtes Zurückströmen des Abgases aus dem Abgasstrang in den Ansaugtrakt zu vermeiden. Das Absperrorgan befindet sich hierzu außerhalb der entsprechenden Lastanforderungsphasen in einer geschlossenen oder zumindest teilweise geschlossenen Stellung.

Eine andere, ebenfalls besonders zweckmäßige Variante wird auch dann realisiert, wenn die Brennkraftmaschine einen Zusatzverdichter und/oder einen Druckspeicher zur Zuführung verdichteter Luft zu der Abgasturbine mittels der Druckzuführleitung aufweist, sodass die Luftzuführung zu dem Abgasstrang unabhängig von der der Brennkraftmaschine zuführbaren Ansaugluft erfolgen kann. Eine unerwünschte Beeinträchtigung der Luftversorgung der Brennkraftmaschine ist dadurch ausgeschlossen. Der Zusatzverdichter kann hierzu durch einen elektrischen Antrieb oder durch den vorhandenen oder einen weiteren Abgasturbolader der Brennkraftmaschine betrieben werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung eine Brennkraftmaschine mit einem Abgasturbolader wobei in
- Fig. 1: der Ansaugtrakt mit dem Abgasstrang durch eine Druckzuführleitung verbunden ist;
- Fig. 2: der in Figur 1 gezeigten Druckzuführleitung ein Absperrorgan zugeordnet ist;
- Fig. 3: der in Figur 1 gezeigten Druckzuführleitung ein Zusatzverdichter zugeordnet ist;
- Fig. 4: die Druckzuführleitung mit dem Ansaugtrakt in Strömungsrichtung hinter einer Drosselklappe der Brennkraftmaschine verbunden ist.

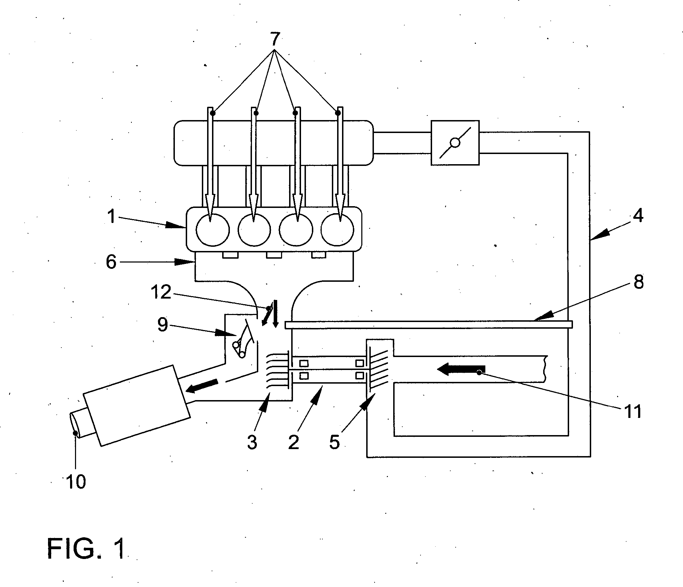

Das erfindungsgemäße Verfahren zum Betrieb einer Brennkraftmaschine 1 mit einem Abgasturbolader 2 wird nachstehend anhand der Figuren 1 bis 4 näher dargestellt, welche jeweils verschiedene Varianten der Erfindung darstellen. Der Abgasturbolader 2 umfasst in einer an sich bekannten Weise einen Verdichter 3 im Ansaugtrakt 4 und eine Abgasturbine 5 im Abgasstrang 6, um angesaugte Ansaugluft 11 auf einen erhöhten Ladedruck zu verdichten. Erfindungsgemäß wird in Abhängigkeit einer bestimmten Lastanforderung während zweier aufeinanderfolgender Takte des Verbrennungszyklus der Brennkraftmaschine 1 in kurzem zeitlichen Abstand mehrfach Kraftstoff 7 eingespritzt. In Verbindung mit einem zusätzlichen Luftvolumen, welches dem Abgasstrang 6 in Strömungsrichtung vor der Abgasturbine 5 zusätzlich zu dem Abgasstrom 12 mit einem erhöhten Druck zuführbar ist, wird ein wesentlich schnellerer Druckaufbau mittels der Abgasturbine 5 und damit eine Verbesserung des dynamischen Verhaltens, insbesondere auch einer vergleichsweise groß dimensionierten Abgasturbine 5, erreicht. Für die Zuführung des zusätzlichen Luftvolumens hat der Abgasstrang 6 in Strömungsrichtung vor der Abgasturbine 5 eine Einlassöffnung, in welche eine Druckzuführleitung 8 mündet, um so den Ansaugtrakt 4 mit dem Abgasstrang 6 zu verbinden, wobei in einer anderen Betriebssituation, in welcher der Abgasvolumenstrom eine maximale Menge überschreitet, ein Teilstrom des Abgases mittels eines Wastegateventils 9 unter Umgehung der Abgasturbine 5 einem Abgasauslass 10 zugeführt wird.

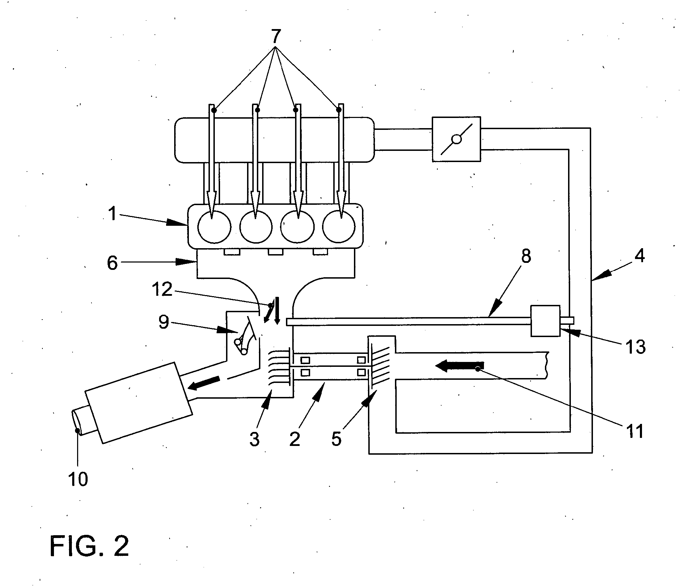

Ausgehend von der in Figur 1 gezeigten Variante, in welcher die Erfindung durch eine als einfache Verbindungsleitung ausgeführte Druckzuführleitung 8 realisiert ist, weist die in Figur 2 dargestellte Variante zusätzlich ein die Luftzuführung zu der Druckzuführleitung 8 unterbrechendes, als schaltbares Ventil ausgeführtes, elektrisch betätigbares Absperrorgan 13 auf, um so das unerwünschte Zurückströmen des Abgasgegendrucks in den Ansaugtrakt 4 zu verhindern.

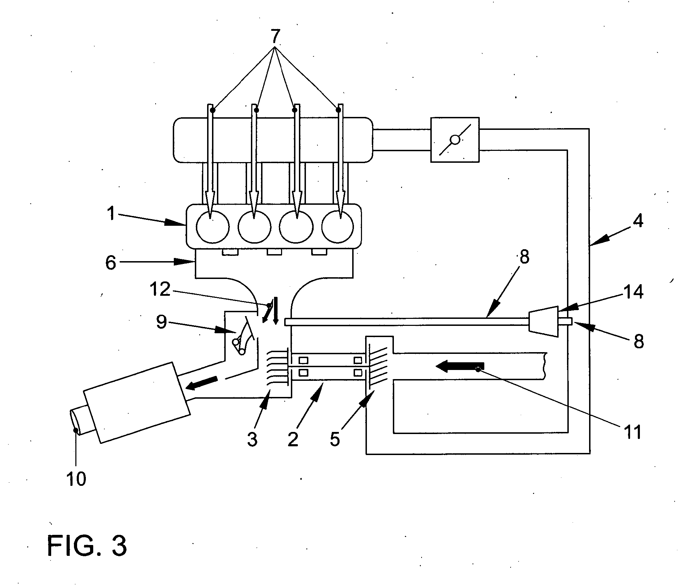

Ergänzend zu der in Figur 2 gezeigten Variante ist bei der in Figur 3 gezeigten Variante der Druckzuführleitung 8 zusätzlich noch ein Zusatzverdichter 14 zugeordnet, um so den gewünschten Luftdruck in jeder beliebigen Betriebsphase unabhängig von den Betriebsbedingungen des Abgasturboladers 2 zur Verfügung stellen zu können. Hierzu eignen sich insbesondere elektrisch betriebene Zusatzverdichter 14.

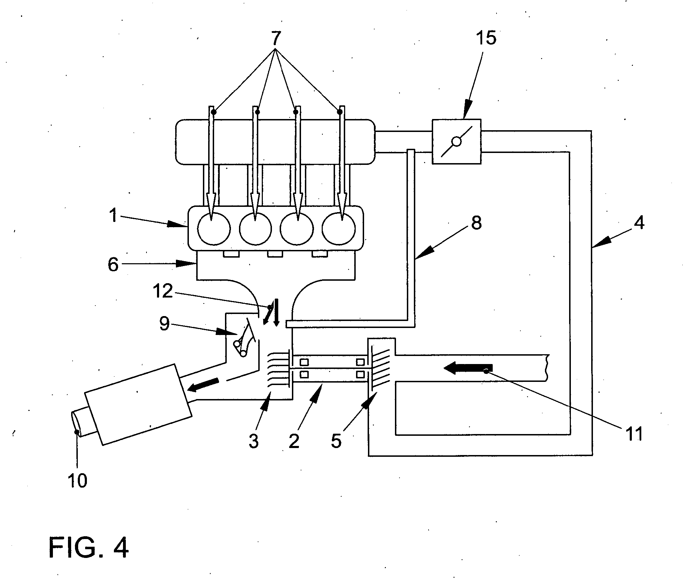

Abschließend zeigt Figur 4 noch eine Variante, in welcher die Druckzuführleitung 8 zur Entnahme der verdichteten Ansaugluft 11 in Strömungsrichtung hinter einer Drosselklappe 15 der Brennkraftmaschine 1 mit dem Ansaugtrakt 4 verbunden ist.

Allen Ausführungsformen gemeinsam ist, dass in Betriebszuständen der Brennkraftmaschine, die insbesondere im 4-Taktverfahren betrieben wird, bei einer erhöhten Lastanforderung, zum Beispiel bei einer Beschleunigung aus einem niedrigen Drehzahl- bzw. Lastbereich heraus, zum schnelleren Druckaufbau mittels der Abgasturbine 5 während eines Taktes und/oder mehrerer nacheinander folgender Takte der Brennkraftmaschine 1 mehrfach Kraftstoff eingespritzt wird.

## Patentansprüche

1. Verfahren zum Betrieb einer einen Abgasturbolader (2) aufweisenden Brennkraftmaschine (1), insbesondere betrieben nach dem 4-Taktverfahren mit einem Verdichter (3) im Ansaugtrakt (4) und einer Abgasturbine (5) im Abgasstrang (6), wobei der Abgasturbolader (2) Ansaugluft (11) auf einen erhöhten Ladedruck verdichtet, **dadurch gekennzeichnet, dass** in einem Betriebszustand mit einer erhöhten Lastanforderung zum schnellen Druckaufbau mittels der Abgasturbine (5) während eines Takts und/oder mehrerer nacheinander folgender Takte der Brennkraftmaschine (1) mehrfach Kraftstoff eingespritzt wird.

2. Verfahren nach Anspruch 1, **dadurch gekennzeichnet, dass** bei der erhöhten Lastanforderung während des Ansaugtakts sowie während des Verdichtungs- und/oder Arbeitstakts Kraftstoff eingespritzt wird.

3. Verfahren nach den Ansprüchen 1 oder 2, **dadurch gekennzeichnet, dass** der Zündwinkel, die Einspritzlage und/oder die Einspritzmenge für diesen Betriebszustand variabel eingestellt werden.

4. Verfahren nach zumindest einem der vorangehenden Ansprüche, **dadurch gekennzeichnet, dass** dem Abgasstrang (6) in Strömungsrichtung vor der Abgasturbine (5) zusätzlich zu dem Abgasstrom (12) weitere Luft mit einem Überdruck gegenüber dem Umgebungsdruck zugeführt wird.

5. Verfahren nach zumindest einem der vorangehenden Ansprüche, **dadurch gekennzeichnet, dass** die Luft aus dem Ansaugtrakt (4) in Strömungsrichtung hinter dem Verdichter (3) entnommen und dem Abgasstrang (6) zugeführt wird.

6. Verfahren nach zumindest einem der vorangehenden Ansprüche, **dadurch gekennzeichnet, dass** die zusätzliche Luft mittels einer Druckzuführleitung (8) zugeführt wird, deren Durchlass lediglich während der erhöhen Lastanforderung geöffnet wird.

7. Verfahren nach zumindest einem der vorangehenden Ansprüche, **dadurch gekennzeichnet, dass** die Luft mittels eines Zusatzverdichters (14) mit einem einstellbaren Druck zugeführt wird.

8. Verfahren nach zumindest einem der vorangehenden Ansprüche, **dadurch gekennzeichnet, dass** die Ansaugluft (11) aus einem Ansaugtrakt (4) in Strömungsrichtung hinter einer Drosselklappe (15) der Brennkraftmaschine (1) entnommen wird.

9. Verfahren nach zumindest einem der vorangehenden Ansprüche, **dadurch gekennzeichnet, dass** ein Teilstrom des Abgasstroms (12) mittels eines Wastegateventils (9) unter Umgehung der Abgasturbine (5) einem Abgasauslass (10) zugeführt wird.

10. Brennkraftmaschine (1) mit einem Abgasturbolader (2), welcher zumindest einen Verdichter (3) im Ansaugtrakt (4) und eine Abgasturbine (5) im Abgasstrang (6) umfasst, **dadurch gekennzeichnet, dass** im Abgasstrang (6) in Strömungsrichtung vor der Abgasturbine (5) eine Einlassöffnung für mittels einer Druckzuführleitung (8) zuführbare Druckluft angeordnet ist.

11. Brennkraftmaschine (1) nach Anspruch 10, **dadurch gekennzeichnet, dass** die Druckzuführleitung (8) mit dem Ansaugtrakt (4) der Brennkraftmaschine (1) in Strömungsrichtung der Ansaugluft (11) hinter dem Verdichter (3) verbunden ist.

12. Brennkraftmaschine (1) nach Anspruch 10 oder 11, **dadurch gekennzeichnet, dass** die Brennkraftmaschine (1) ein die Luftzuführung zu der Druckzuführleitung (8) unterbrechendes, elektrisch betätigbares Absperrorgan (13) aufweist.

13. Brennkraftmaschine (1) nach zumindest einem der Ansprüche 10 bis 12, **dadurch gekennzeichnet, dass** die Brennkraftmaschine (1) einen Zusatzverdichter (14) und/oder einen Druckspeicher zur Zuführung verdichteter Luft zu der Abgasturbine (5) mittels der Druckzuführleitung (8) aufweist.
